# EUROPÄISCHE PATENTSCHRIFT

(11) **EP 1 879 761 B1**
(45) Veröffentlichungstag und Bekanntmachung des Hinweises auf die Patenterteilung: **15.07.2009**
(21) Anmeldenummer: 06722846.0
(22) Anmeldetag: 08.05.2006
(51) Int. Cl.: B60H 1/00, B60S 1/08

(54) **SENSORANORDNUNG ZUR DETEKTION DER BESCHLAGSNEIGUNG**
SENSOR ARRANGEMENT FOR RECORDING MISTING TENDENCY
DISPOSITIF DE DETECTION POUR DETECTER LA TENDANCE A LA FORMATION DE CONDENSATION

(30) Priorität: 11.05.2005 DE 102005021708
(43) Veröffentlichungstag der Anmeldung: 23.01.2008
(73) Patentinhaber: Hella KGaA Hueck & Co., 59552 Lippstadt (DE)
(72) Erfinder: NIEMANN, Thomas, 27753 Dalmenhorst (DE); HEILENKÖTTER, Carsten, 28844 Weyhe (DE); BÜLTER, Andreas, 28777 Bremen (DE)
(74) Vertreter: Siekmann, Gunnar
(86) Internationale Anmeldenummer: PCT/DE2006/000789
(87) Internationale Veröffentlichungsnummer: WO 2006/119740

(56) Entgegenhaltungen:
- EP-A- 1 285 790
- DE-A1- 10 261 921
- DE-A1- 10 325 971
- DE-A1- 19 601 392
- DE-C1- 19 942 286

## Beschreibung

Die Erfindung betrifft eine Sensoranordnung zur Detektion der Beschlagsneigung auf einer Innenfläche, insbesondere auf der dem Fahrzeuginnenraum zugewandten Seite einer Windschutzscheibe, mit einem berührungslosen Temperatursensor zur Messung der Temperatur der Innenfläche, insbesondere der dem Fahrzeuginnenraum zugewandten Seite der Windschutzscheibe, und mit einem Feuchtesensor zur Messung der Luftfeuchtigkeit.

Eine derartige Sensoranordnung ist beispielsweise aus der DE 103 25 971 A1 bekannt. Derartige Sensoranordnungen liefern Messwerte bzw. daraus berechnete Werte zur relativen Feuchte und zur Temperatur oder zum aktuellen Taupunkt. Aus den so gewonnenen Messergebnissen können Maßnahmen abgeleitet werden, indem beispielsweise die Heizungs-, Lüftungs-und/oder Klimaanlage entsprechend gesteuert oder geregelt werden, um dem aktuellen Beschlagszustand oder der aktuellen Beschlagsneigung entgegenzuwirken. Eine derartige Vorrichtung ist beispielsweise in der DE 199 42 286 C1 beschrieben.

Der Erfindung liegt die Aufgabe zugrunde, eine Sensoranordnung der eingangs genannten Art zu schaffen, die besonders kompakt ausgebildet ist.

Die Lösung dieser Aufgabe erfolgt mit einer Sensoranordnung mit den Merkmalen des Patentanspruchs 1. Vorteilhafte Weiterbildungen der Erfindung sind in den Unteransprüchen angegeben.

Bei einer Sensoranordnung zur Detektion der Beschlagsneigung auf einer Innenfläche, insbesondere auf der dem Fahrzeuginnenraum zugewandten Seite einer Windschutzscheibe, mit einem berührungslosen Temperatursensor zur Messung der Temperatur der Innenfläche, insbesondere der dem Fahrzeuginnenraum zugewandten Seite der Windschutzscheibe, und einem Feuchtesensor zur Messung der Luftfeuchtigkeit, ist es erfindungsgemäß vorgesehen, daß der Temperatursensor und der Feuchtesensor als Halbleiterelemente ausgebildet sind und daß der Temperatursensor und der Feuchtesensor übereinander gestapelt angeordnet sind. Auf diese Weise läßt sich eine besonders kompakte Bauform erreichen, die sehr wenig Platz beansprucht. Außerdem ist diese Art der Ausbildung der Sensoranordnung vergleichsweise kostengünstig zu realisieren.

Bevorzugt ist der Temperatursensor über dem Feuchtesensor angeordnet. Oberhalb des Feuchtesensors ist günstigerweise eine Abdeckung angeordnet, die bevorzugt in Mikrosystemtechnik hergestellt ist. Auf diese Weise ist der Temperatursensor zwischen Feuchtesensor und der Abdeckung eingeschlossen und ist besonders kompakt und dabei geschützt angeordnet. Die Abdeckung, der Temperatursensor und der Feuchtesensor sind bevorzugt als Schichtstapel ausgebildet. Dies ist besonders kompakt. Der Temperatursensor ist bevorzugt als Thermopile ausgebildet. Der Thermopile wird im deutschen auch als Thermosäule bezeichnet. Der Temperatursensor ist bevorzugt in einem luftdichten Gehäuse angeordnet bzw. gehaust. Das Gehäuse wird dabei im wesentlichen durch den Feuchtesensor und die Abdeckung ausgebildet. In einer bevorzugten Ausgestaltung ist das Gehäuse evakuiert. In einer anderen bevorzugten Ausgestaltung ist das Gehäuse mit einem inerten Gas befüllt. Die Gasbefüllung erlaubt spezifische Einstellungen des als Thermopile ausgebildeten Temperatursensors. Bevorzugt sind der Temperatursensor und der Feuchtesensor mit ihren Rückseiten miteinander verbunden.

In einer anderen bevorzugten Ausgestaltung der Erfindung sind in der Abdeckung optische Elemente integriert. Diese optischen Elemente können beispielsweise Abschattungen, Gitter, Linsen oder andere Elemente sein, mit denen die Richtcharakteristik des berührungslosen Temperatursensors gezielt beeinflußt werden kann.

Die Sensoranordnung weist bevorzugt ein Gehäuse auf. In dem Gehäuse ist bevorzugt zumindest eine Öffnung vorgesehen. Bevorzugt ist an jeder Seite des Gehäuses mindestens eine Öffnung vorgesehen. Günstigerweise ist oberhalb der Sensoren, insbesondere oberhalb des Schichtstapels, eine Öffnung vorgesehen, so daß Umgebungsluft und auch Strahlung zu den Sensoren gelangen kann. In einer anderen bevorzugten Ausgestaltung ist in dem Gehäuse eine Leiterplatte vorgesehen, auf der der Schichtstapel angeordnet ist. Die Leiterplatte ist günstigerweise im wesentlichen von einem Kontaktstift gehalten.

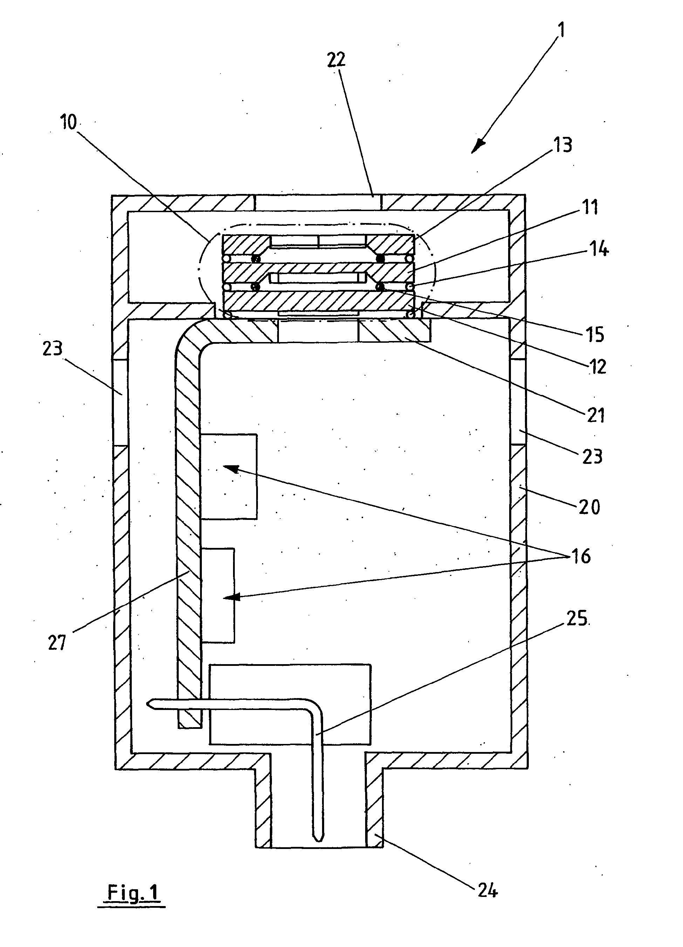

Nachfolgend wird die Erfindung anhand eines in der Zeichnung dargestellten bevorzugten Ausführungsbeispiels weiter erläutert. Die einzige Figur der Zeichnung zeigt einen Querschnitt durch eine schematisch dargestellte erfindungsgemäße Sensoranordnung.

In der Figur ist die gesamte Sensoranordnung mit 1 gekennzeichnet. Diese weist im wesentlichen den in dem Gehäuse 20 angeordneten Schichtstapel 10 auf, wobei sich der Schichtstapel aus einem Feuchtesensor 12, einem Temperatursensor 11 und einer Abdeckung 13 zusammensetzt. Sowohl der Feuchtesensor 12 als auch der Temperatursensor 11 als auch die Abdeckung 13 sind in Mikrosystemtechnik hergestellt. Der Feuchtesensor 11, der bevorzugt als Thermopile ausgebildet ist, und der Feuchtesensor 12 weisen einen ASIC zur Signalaufbereitung auf. Der unten liegende Feuchtesensor 12 ist mit Lötungen 14 auf einer darunter liegenden Leiterplatte 1 befestigt. Ebenso mit Lötungen 14 ist der Temperatursensor 11 auf dem Feuchtesensor 12 und die Abdeckung 13 auf dem Temperatursensor 11 befestigt. Die drei Elemente sind in ihren Abmessungen übereinstimmend ausgebildet, und übereinander gestapelt, so daß sich insgesamt der beschriebene Schichtstapel ergibt. Oberhalb und unterhalb des Temperatursensors 11 sind zudem umlaufende Dichtungen 15 vorgesehen, so daß der als Thermopile ausgebildete Temperatursensor 11 hermetisch gehaust oder eingeschlossen ist. Dadurch wird erreicht, daß das Thermopile nur auf den Einfluß von außen wirkender thermischer Strahlung im fernen Infrarot (> 3,5 µm) reagiert. Er ist dazu von oben und unten abgedeckt und der entstehende Hohlraum kann evakuiert oder mit einem inerten Gas gefüllt werden. Der Feuchtesensor 12 und der Temperatursensor 11 sind mit ihren Rückseiten miteinander verbunden. Die elektrische Kontaktierung erfolgt über Durchkontaktierungen der Halbleiterbauelemente, die in Mikrosystemtechnik (MST) hergestellt sind. In dem Gehäuse 20 ist oberhalb des Schichtstapels 10 eine Öffnung 22 vorgesehen. In den Seiten des Gehäuses 20 sind weiterhin mehrere Öffnungen 23 vorgesehen. Auch in der Leiterplatte 21, auf der der Schichtstapel angeordnet ist, ist unterhalb des Schichtstapels 10 eine Öffnung 26 vorgesehen. Durch diese Öffnungen dringt Umgebungsluft und Strahlung in das Gehäuse ein und gelangt zu den Sensoren. In der Abdeckung 13 des Schichtstapels 10 sind zudem optische Elemente integriert, die eine bestimmte Einstrahlungscharakteristik in der einfallenden Strahlung bezüglich des darunter liegenden Temperatursensors ausbilden. Die Leiterplatte 21 ist in ihrer Dimensionierung etwas größer als der Schichtstapel 10 ausgebildet und wird von einem rechtwinklig nach unten abknickenden Bereich 27 gehalten. Dieser vertikale Bereich 27 ist an einem Kontaktstift 25 befestigt. Insgesamt ist die Leiterplatte dadurch gegenüber dem Gehäuse 20 flexibel gehalten. Der Kontaktstift 25 ist im unteren Bereich des Gehäuses 20 durch einen Steckerkorb 24 geführt. An dem Bereich 27 der Leiterplatte 21 sind zudem zwei EMV-Schutzbeschaltungen 16 vorgesehen (EMV: Elektromagnetische Verträglichkeit).

Mit dieser Sensoranordnung kann auf kleinem Raum gleichzeitig die Temperatur und die Luftfeuchtigkeit detektiert werden. Daraus kann eine Information über die Beschlagsneigung abgeleitet werden und es können dann entsprechende Gegenmaßnahmen durch die Lüftung oder Klimaanlage insbesondere eines Kraftfahrzeuges eingeleitet werden.

## Patentansprüche

1. Sensoranordnung zur Detektion der Beschlagsneigung auf einer Innenfläche, insbesondere auf der einem Fahrzeuginnenraum zugewandten Seite einer Windschutzscheibe, mit einem berührungslosen Temperatursensor (11) zur Messung der Temperatur der Innenfläche, insbesondere der dem Fahrzeuginnenraum zugewandten Seite der Windschutzscheibe, und einem Feuchtesensor (12) zur Messung der Luftfeuchtigkeit,
**dadurch gekennzeichnet,**
**daß** der Temperatursensor (11) und der Feuchtesensor (12) als Halbleiterbauelemente ausbildet sind und
**daß** der Temperatursensor (11) und der Feuchtesensor (12) übereinander gestapelt angeordnet sind.

2. Sensoranordnung nach Anspruch 1, **dadurch gekennzeichnet, daß** der Temperatursensor (11) über dem Feuchtesensor (12) angeordnet ist.

3. Sensoranordnung nach einem der Ansprüche 1 und 2, **dadurch gekennzeichnet, daß** über dem Feuchtesensor (11) eine im Mikrosystemtechnik hergestellte Abdeckung (13) angeordnet ist.

4. Sensoranordnung nach einem der vorhergehenden Ansprüche, **dadurch gekennzeichnet, daß** die Abdeckung (13), der Temperatursensor (11) und der Feuchtesensor (12) als Schichtstapel ausgebildet sind.

5. Sensoranordnung nach einem der vorhergehenden Ansprüche, **dadurch gekennzeichnet, daß** der Temperatursensor (11) als Thermopile ausgebildet ist.

6. Sensoranordnung nach einem der vorhergehenden Ansprüche, **dadurch gekennzeichnet, daß** der Temperatursensor (11) in einem luftdichten Gehäuse angeordnet ist.

7. Sensoranordnung nach Anspruch 6, **dadurch gekennzeichnet, daß** das Gehäuse im wesentlichen durch den Feuchtesensor (12) und die Abdeckung (13) ausgebildet ist.

8. Sensoranordnung nach einem der Ansprüche 6 oder 7, **dadurch gekennzeichnet, daß** das Gehäuse evakuiert ist.

9. Sensoranordnung nach einem der Ansprüche 5 bis 8, **dadurch gekennzeichnet, daß** das Gehäuse mit einem inerten Gas gefüllt ist.

10. Sensoranordnung nach einem der vorhergehenden Ansprüche, **dadurch gekennzeichnet, daß** der Temperatursensor (11) und der Feuchtesensor (12) mit ihren Rückseiten miteinander verbunden sind.

11. Sensoranordnung nach einem der Ansprüche 3 bis 10, **dadurch gekennzeichnet, daß** in der Abdeckung (13) optische Elemente integriert sind.

12. Sensoranordnung nach einem der vorhergehenden Ansprüche, **dadurch gekennzeichnet, daß** die Sensoranordnung in einem Gehäuse (20) angeordnet ist.

13. Sensoranordnung nach Anspruch 12, **dadurch gekennzeichnet, daß** in dem Gehäuse (20) eine Leiterplatte (21) vorgesehen ist, auf der der Schichtstapel (10) angeordnet ist.

## Claims

1. A sensor arrangement for the detection of misting tendency on an inner surface, in particular on the side of a windscreen facing the vehicle interior, comprising a non-contact temperature sensor (11) for measuring the temperature of the inner surface, in particular, the side of the windscreen facing the vehicle interior, and a humidity sensor (12) for measuring the humidity of the air,
**characterized in**
**that** the temperature sensor (11) and the humidity sensor (12) are embodied as semiconductor components, and
**that** the temperature sensor (11) and the humidity sensor (12) are arranged stacked on top of each other.

2. The sensor arrangement according to claim 1, **characterized in that** the temperature sensor (11) is arranged above the humidity sensor (12).

3. The sensor arrangement according to any one of the claims 1 and 2, **characterized in that** above the humidity sensor (11), a cover (13) is arranged which is produced in micro systems technology.

4. The sensor arrangement according to any one of the preceding claims, **characterized in that** the cover (13), the temperature sensor (11), and the humidity sensor (12) are embodied as a layered stack.

5. The sensor arrangement according to any one of the preceding claims, **characterized in that** the temperature sensor (11) is embodied as a thermopile.

6. The sensor arrangement according to any one of the preceding claims, **characterized in that** the temperature sensor (11) is arranged within an airtight housing.

7. The sensor arrangement according to claim 6, **characterized in that** the housing is substantially embodied by the humidity sensor (12) and the cover (13).

8. The sensor arrangement according to any one of the claims 6 or 7, **characterized in that** the housing is evacuated.

9. The sensor arrangement according to any one of the claims 5 to 8, **characterized in that** the housing is filled with an inert gas.

10. The sensor arrangement according to any one of the preceding claims, **characterized in that** the temperature sensor (11) and the humidity sensor (12) are connected to each other on their rear sides.

11. The sensor arrangement according to any one of the claims 3 to 10, **characterized in that** optical elements are integrated within the cover (13).

12. The sensor arrangement according to any one of the preceding claims, **characterized in that** the sensor arrangement is arranged within a housing (20).

13. The sensor arrangement according to claim 12, **characterized in that** within the housing (20), a printed circuit board (21) is provided on which the layered stack (10) is arranged.

## Revendications

1. Dispositif capteur pour la détection de l'inclinaison de ferrure sur une surface intérieure, en particulier sur le côté, tourné vers un habitacle de véhicule, d'un pare-brise, avec un capteur de température (11) sans contact pour la mesure de la température de la surface intérieure, en particulier le côté, tourné vers l'habitacle, du pare-brise, et un capteur d'humidité (12) pour la mesure de l'humidité de l'air,
**caractérisé en ce que**
le capteur de température (11) et le capteur d'humidité (12) sont réalisés sous forme de composants à semi-conducteur et
**en ce que** le capteur de température (11) et le capteur d'humidité (12) sont disposés de façon empilée l'un au-dessus de l'autre.

2. Dispositif capteur selon la revendication 1, **caractérisé en ce que** le capteur de température (11) est disposé au-dessus du capteur d'humidité (12).

3. Dispositif capteur selon l'une quelconque des revendications 1 et 2, **caractérisé en ce qu'**un cache (13) fabriqué dans la technique de microsystème est disposé au-dessus du capteur d'humidité (11).

4. Dispositif capteur selon l'une quelconque des revendications précédentes, **caractérisé en ce que** le cache (13), le capteur de température (11) et le capteur d'humidité (12) sont réalisés sous forme de pile de couches.

5. Dispositif capteur selon l'une quelconque des revendications précédentes, **caractérisé en ce que** le capteur de température (11) est conçu sous forme de thermopile.

6. Dispositif capteur selon l'une quelconque des revendications précédentes, **caractérisé en ce que** le capteur de température (11) est disposé dans un boîtier étanche à l'air.

7. Dispositif capteur selon la revendication 6, **caractérisé en ce que** le boîtier est réalisé essentiellement par le capteur d'humidité (12) et le cache (13).

8. Dispositif capteur selon l'une quelconque des revendications 6 ou 7, **caractérisé en ce que** le boîtier est mis sous vide.

9. Dispositif capteur selon l'une quelconque des revendications 5 à 8, **caractérisé en ce que** le boîtier est rempli avec un gaz inerte.

10. Dispositif capteur selon l'une quelconque des revendications précédentes, **caractérisé en ce que** le capteur de température (11) et le capteur d'humidité (12) sont reliés l'un à l'autre par leurs faces arrière.

11. Dispositif capteur selon l'une quelconque des revendications 3 à 10, **caractérisé en ce que** des éléments optiques sont intégrés dans le cache (13).

12. Dispositif capteur selon l'une quelconque des revendications précédentes, **caractérisé en ce que** le dispositif capteur est disposé dans un boîtier (20).

13. Dispositif capteur selon la revendication 12, **caractérisé en ce qu'**il est prévu dans le boîtier (20) une plaque conductrice (21) sur laquelle est disposée la pile de couches (10).
